# EUROPÄISCHE PATENTSCHRIFT

(11) **EP 3 715 745 B1**
(45) Veröffentlichungstag und Bekanntmachung des Hinweises auf die Patenterteilung: **17.08.2022**
(21) Anmeldenummer: 20166068.5
(22) Anmeldetag: 26.03.2020
(51) Int. Cl.: F24S 20/66, F24S 20/00, F24S 25/63, H02S 20/26, H02S 40/44, H02S 20/22, F24S 25/60, F24S 25/33

(54) **BEFESTIGUNGSSYSTEM FÜR EIN HYBRIDSOLARMODULSYSTEM SOWIE HYBRIDSOLARMODULSYSTEM UND BEFESTIGUNGSVERFAHREN**
HYBRID SOLAR MODULE SYSTEM AND METHOD OF USE, FASTENING SYSTEM FOR A HYBRID SOLAR MODULE SYSTEM
SYSTÈME DE FIXATION POUR UN SYSTÈME DE MODULE SOLAIRE HYBRIDE AINSI QUE SYSTÈME DE MODULE SOLAIRE HYBRIDE ET PROCÉDÉ DE FIXATION

(30) Priorität: 27.03.2019 DE 102019107926
(43) Veröffentlichungstag der Anmeldung: 30.09.2020
(73) Patentinhaber: Beyersdorffer, Mathias, 29160 Crozon (FR); Grobe, Carsten, 31174 Schellerten (DE)
(72) Erfinder: Beyersdorffer, Mathias, 29160 Crozon (FR)
(74) Vertreter: Heyerhoff Geiger & Partner Patentanwälte PartGmbB

(56) Entgegenhaltungen:
- EP-A1- 2 937 646
- EP-A1- 3 182 580
- WO-A1-2013/017962
- DE-U1-202016 100 046
- US-A1- 2011 283 635

## Beschreibung

Die vorliegende Erfindung betrifft ein Befestigungssystem für ein Hybridsolarmodulsystem sowie ein solches Hybridsolarmodulsystem und ein Verfahren zur Befestigung von Hybridsolarmodulsystemen.

Photovoltaikmodule dienen der Umwandlung von Sonneneinstrahlung in elektrische Energie. Bei einem solchen Umwandlungsprozess heizen sich die Module auf, wodurch ihr Wirkungsgrad absinkt. Zur Lösung dieses Problems ist es bekannt, Photovoltaikmodule zu kühlen, indem Kühlmittelleitungen an ihrer Rückseite entlang geführt werden, die von Kühlmittel durchströmt werden. Die Kühlmittelleitungen können dabei Teil eines Wärmetauschers sein, der die im Photovoltaikmodul entstehende Wärme flächig aufnehmen und über das Kühlmittel in einer Kühlmittelleitung abführen kann. Die derart abgeführte Wärme kann vorteilhaft genutzt werden, so dass solche Anordnungen aus Photovoltaikmodul und Wärmetauscher auch als Hybridsolarmodul bezeichnet werden.

Aus dem Stand der Technik ist dazu bekannt, die Kühlmittelleitungen auf der Rückseite des Photovoltaikmoduls am Halbleitermaterial des Photovoltaikmoduls anzulaminieren. Alternativ dazu ist es z.B. aus DE 20 2016 100 046 U1 bekannt, Photovoltaikmodule mit Wärmetauschern zu verschrauben, so dass die so erzeugten Hybridsolarmodule mittels eines Dachmontagesystems auf einem Gebäudedach montiert werden können.

Dokument WO 2013/017962 A1 beschreibt ein Befestigungssystem für ein Hybridsolarmodulsystem gemäß dem Oberteil des Anspruchs 1. Es ist eine Aufgabe der vorliegenden Erfindung, die Befestigung von Photovoltaikmodulen an Wärmetauschermodulen zu verbessern, insbesondere flexibler zu machen.

Diese Aufgabe wird gelöst durch ein Befestigungssystem für ein Hybridsolarmodulsystem, ein solches Hybridsolarmodulsystem sowie ein Verfahren zur Befestigung eines Hybridsolarmodulsystems an einer Fassade gemäß den unabhängigen Ansprüchen.

Ein Befestigungssystem für ein Hybridsolarmodulsystem gemäß Erfindung weist auf: (i) ein Wärmetauschermodul zur Befestigung an einer Fassade, das mindestens einen Fluidkanal und eine Befestigungseinrichtung aufweist, und (ii) eine Einhängeeinrichtung zur Befestigung an einer Rückseite eines Photovoltaikmoduls. Dabei ist die Einhängeeinrichtung komplementär zur Befestigungseinrichtung ausgebildet und dazu eingerichtet, so in die Befestigungseinrichtung einzugreifen, dass das Photovoltaikmodul mit der Einhängeeinrichtung am Wärmetauschermodul hängend befestigt werden kann.

Erfindungsgemäß ist die Einhängeeinrichtung so ausgebildet, dass das Photovoltaikmodul durch sein Eigengewicht flächig anliegend an das Wärmetauschermodul angepresst wird.

Ein Aspekt der Erfindung basiert auf dem Ansatz, eine Einhängeeinrichtung zur Befestigung an einer Rückseite eines Photovoltaikmoduls und ein Wärmetauschermodul mit einer, insbesondere integral mit dem Wärmetauschermodul ausgebildeten, Befestigungseinrichtung vorzusehen, wobei die Einhängeeinrichtung zumindest teilweise komplementär zur Befestigungseinrichtung ausgebildet, beispielsweise geformt, ist. Die Einhängeeinrichtung ist dabei vorzugsweise in der Weise ausgebildet, dass die Einhängeeinrichtung in die Befestigungseinrichtung eingehängt, d. h. hängend an der Befestigungseinrichtung befestigt, werden kann. Die Einhängeeinrichtung kann somit durch ihr Eigengewicht, insbesondere durch das Eigengewicht des Photovoltaikmoduls, auf dessen Rückseite sie befestigt ist, am Wärmetauschermodul befestigt bzw. gehalten werden. Diese Art der Befestigung erlaubt z.B. eine besonders flexible Einkleidung einer Fassade mit Hybridsolarmodulen, da einzelne Photovoltaikmodule durch Aus- oder Abhängen leicht von Wärmetauschermodulen getrennt und beispielsweise bei einem Defekt oder einer Beschädigung ausgetauscht werden können.

Das Einhängen zumindest eines Teils der Einhängeeinrichtung in die Befestigungseinrichtung des Wärmetauschermoduls wird vorzugsweise ermöglicht, indem die Einhängeeinrichtung dazu eingerichtet ist, zumindest teilweise in die Befestigungseinrichtung einzugreifen. Zum Beispiel ist es denkbar, dass die Einhängeeinrichtung so ausgebildet ist, dass sie in die Befestigungseinrichtung eingehängt, z.B. eingehakt, werden kann. Dies ermöglicht neben einer Erleichterung der Montage zugleich eine sichere Befestigung eines Photovoltaikmoduls an einem oder bevorzugt mehreren Wärmetauschermodulen.

Ein derartiges Befestigungssystem eignet sich besonders zur Montage von Hybridsolarmodulen an Gebäudefassaden, da die Ausrichtung der Photovoltaikmodule parallel zur Gebäudefassade die hängende Befestigung an den an der Fassade befestigten Wärmetauschermodulen begünstigt. Beispielsweise erfolgt in diesem Fall der Kraftabtrag im Wesentlichen parallel zur Kontaktfläche zwischen Photovoltaikmodul und Wärmetauschermodul, sodass das Photovoltaikmodul zum Einhängen der Einhängeeinrichtung in die Befestigungseinrichtung des Wärmetauschermoduls im Wesentlichen lediglich senkrecht dazu bewegt werden muss. Es ist aber auch denkbar, das erfindungsgemäße Befestigungssystem in einem anderen Zusammenhang, beispielsweise bei der Montage von Hybridsolarmodulen auf einem Gebäudedach, zu verwenden.

Zudem kann ein derartiges Befestigungssystem auch hohe ästhetische Ansprüche erfüllen, da bei Eindeckung einer Fassade keine Halterungen der Photovoltaikmodule sichtbar sind. Insgesamt ermöglicht die Erfindung eine verbesserte, insbesondere flexiblere, Befestigung eines Photovoltaikmoduls an einem oder mehreren Wärmetauschermodulen.

Die Merkmale der im Folgenden ausgeführten bevorzugten Ausführungsformen der Erfindung sind, sofern nicht ausdrücklich ausgeschlossen oder technisch unmöglich, beliebig miteinander kombinierbar.

In einer bevorzugten Ausführungsform ist die Einhängeeinrichtung in der Weise ausgebildet, dass das Eigengewicht des Photovoltaikmoduls, d.h. eines mit der Einhängeeinrichtung verbundenen Photovoltaikmoduls, die Einhängeeinrichtung beim Eingreifen in die Befestigungseinrichtung in der Befestigungseinrichtung und damit das Photovoltaikmodul in einem vorgegebenen Abstand zum Wärmetauschermodul fixiert. Die Einhängeeinrichtung kann insbesondere in der Weise ausgebildet sein, dass das mit der Einhängeeinrichtung verbundene Photovoltaikmodul beim Einhängen in die Befestigungseinrichtung, insbesondere eigengewichtsbedingt automatisch, an das Wärmetauschermodul bis zum vorgegebenen Abstand herangezogen wird und/oder im Wesentlichen planparallel zum Wärmetauscher ausgerichtet ist bzw. wird. Dabei entspricht der vorgegebene Abstand vorzugsweise einem Abstand zwischen dem Photovoltaikmoduls und dem Wärmetauschermodul, in dem die Wärmekopplung zwischen dem Photovoltaikmodul und dem Wärmetauscher einen vorgegebenen Schwellenwert erreicht oder überschritten hat. Die beschriebene Ausbildung der Einhängeeinrichtung erlaubt es dadurch, eine ausreichende Wärmekopplung sicherzustellen.

Dabei ist es besonders vorteilhaft, dass das Eigengewicht des Photovoltaikmoduls die Fixierung der Einhängeeinrichtung in der Befestigungseinrichtung bedingt. Es kann dadurch beispielsweise auf zusätzliche, aufwändige Fixierungsmechanismen verzichtet werden.

In einer weiteren bevorzugten Ausführungsform weist die Einhängeeinrichtung hakenartige Vorsprünge auf, welche dazu eingerichtet sind, in die Befestigungseinrichtung einzugreifen. Hakenartige Vorsprünge ermöglichen es insbesondere, die Einhängeeinrichtung durch eine zur Wirkrichtung der Gewichtskraft des Photovoltaikmoduls senkrechte Bewegung in die Befestigungseinrichtung eines an einer Gebäudefassade befestigten Wärmetauschermoduls einzuhängen, ohne dass zusätzliche Arbeit gegen die Gewichtskraft des Photovoltaikmoduls oder zur Betätigung eines Befestigungsmechanismus geleistet werden muss. Zudem können hakenartige Vorsprünge eine Sicherung gegen das Herausrutschen der Einhängeeinrichtung aus der Befestigungseinrichtung bieten.

Vorzugsweise ist die Einhängeeinrichtung derart ausgebildet, dass jeweils zwei hakenartige Vorsprünge paarweise horizontal angeordnet sind, d. h. beim Einhängen in die Befestigungseinrichtung auf gleicher Höhe in die Befestigungseinrichtung, zum Beispiel dafür vorgesehene Ausnehmungen in der Befestigungseinrichtung, eingreifen. Dadurch kann die Einhängeeinrichtung und damit auch das mit ihr verbundene Photovoltaikmodul besonders leicht in einer vorgegebenen Ausrichtung am Wärmetauschermodul aufgehängt werden.

In einer weiteren bevorzugten Ausführungsform weisen die hakenartigen Vorsprünge jeweils eine zumindest abschnittsweise gekrümmte Kontaktkante auf, über welche die Einhängeeinrichtung beim Einhängen in die Befestigungseinrichtung bis in eine Rastposition, in der das Photovoltaikmodul im vorgegebenen Abstand zum Wärmetauschermodul fixiert ist, insbesondere flächig anliegend am Wärmetauschermodul angepresst ist, abgleiten kann. Dadurch kann das Eigengewicht des Photovoltaikmoduls die Einhängeeinrichtung in der Befestigungseinrichtung mit hoher Präzision, insbesondere genauer als 5 mm, vorzugsweise genauer als 2 mm, bevorzugt genauer als 1 mm, im vorgegebenen Abstand fixieren.

Die durch die gekrümmte Kontaktkante bedingte abgerundete Form der hakenartigen Vorsprünge kann es insbesondere ermöglichen, herstellungs- und montagebedingte Toleranzen zu kompensieren. Dies ist insbesondere dann der Fall, wenn beispielsweise die Einhängeeinrichtung und/oder die Befestigungseinrichtung zumindest teilweise aus einem weichen Material, insbesondere Metall, etwa Aluminium, gefertigt ist bzw. sind. Beim Abgleiten über die gekrümmte Kontaktkante und/oder beim Liegen in der Rastposition kann sich die Einhängeeinrichtung, insbesondere die hakenförmigen Vorsprünge, und/oder die Befestigungseinrichtung geringfügig verformen, wodurch ein passgenauer Sitz der Einhängeeinrichtung in der Befestigungseinrichtung ermöglicht wird.

In einer weiteren bevorzugten Ausführungsform ist die Einhängeeinrichtung durch Aufkleben auf die Rückseite des Photovoltaikmoduls am Photovoltaikmodul befestigbar. Die Einhängeeinrichtung kann beispielsweise mittels eines SSG-Silikonklebstoffs mit dem Photovoltaikmodul verklebt werden, da dieser Klebstofftyp den mechanischen, thermischen und witterungsbedingten Belastungen in einer Ebene parallel zur Gebäudefassade standhalten kann. Die Verklebung der Einhängeeinrichtung hat dabei den Vorteil, dass keine weiteren Elemente zu Befestigung an dem Photovoltaikmoduls notwendig sind. Dadurch kann prinzipiell jedes Photovoltaikmodul ohne weitere Modifikationen mit einer Befestigungseinrichtung ausgestattet werden. Insbesondere können so Photovoltaikmodule, wie sie vom Hersteller geliefert werden, zur Auskleidung einer Fassade verwendet werden, ohne dass die Module in einen speziellen Rahmen eingefasst oder anderweitig, insbesondere durch einen strukturellen Eingriff wie eine Bohrung und/oder das Einschneiden eines Gewindes, auf die Befestigung am Wärmetauschermodul vorbereitet werden müssen.

Vorzugsweise wird bzw. ist die Einhängeeinrichtung durch mehrere, insbesondere zwei, in bevorzugter Weise parallel verlaufende, linienartige Verklebungen mit der Rückseite des Photovoltaikmoduls verklebt. Dabei verlaufen die linienartigen Verklebungen vorzugsweise parallel zu einer Längsachse der Einhängeeinrichtung, insbesondere vertikal über die Rückseite des mit einem an eine Fassade befestigten Wärmetauschermodul verbundenen Photovoltaikmoduls. Durch die Verwendung von mehreren Verklebungen kann der Lastabtrag zwischen dem Photovoltaikmodul und der Einhängeeinrichtung gleichmäßig, insbesondere über die gesamte Kontaktfläche zwischen dem Photovoltaikmodul und der Einhängeeinrichtung, verteilt werden.

Das Aufkleben der Einhängeeinrichtung durch linienförmige Verklebungen hat außerdem gegenüber einer flächigen Klebung den Vorteil, dass eine Wärmeisolation des Photovoltaikmoduls durch die Klebefläche vermieden oder zumindest verringert wird. In einer weiteren bevorzugten Ausführungsform ist die Befestigungseinrichtung als, insbesondere längliche, profilartige, insbesondere U-förmige, Vertiefung im Wärmetauschermodul, die sich parallel zum mindestens einen Fluidkanal, insbesondere parallel zu einer Längsachse des Wärmetauschermoduls, erstreckt, ausgebildet. Vorzugsweise ist die längliche profilartige Vertiefung dabei derart ausgebildet, dass die Einhängeeinrichtung zumindest abschnittsweise darin versenkbar ist. Dadurch ist es möglich, den Abstand zwischen dem Photovoltaikmodul und dem Wärmetauschermodul zu minimieren, insbesondere das Photovoltaikmodul flächig anliegend an das Wärmetauschermodul anzupressen. Zudem sichert das Versenken der Einhängeeinrichtung in der Vertiefung die Einhängeeinrichtung, gegebenenfalls zusätzlich, gegen ein, insbesondere horizontales, Verrutschen senkrecht zur Erstreckungsrichtung der Vertiefung.

Die Vertiefung kann dabei insbesondere derart in das Wärmetauschermodul eingelassen sein, dass sie sich in vertikaler Richtung erstreckt, wenn das Wärmetauschermodul an einer Gebäudefassade befestigt ist. Des Weiteren kann die Befestigungseinrichtung innerhalb der Vertiefung Befestigungsmittel, beispielsweise Öffnungen, aufweisen, in welche die Einhängeeinrichtung eingreifen kann und an denen die Einhängeeinrichtung hängend befestigt werden kann. Es ist zum Beispiel denkbar, die Befestigungsmittel als Stege, welche senkrecht zur länglichen Vertiefung verlaufen und die Vertiefung überspannen, auszubilden, an welchen die Einhängeeinrichtung, insbesondere mittels hakenartiger Vorsprünge der Einhängeeinrichtung, aufgehängt werden kann. Dadurch, dass die Befestigungsmittel innerhalb der Vertiefung angeordnet sind, ist zumindest der mit den Befestigungsmittel wechselwirkende Teil der Einhängeeinrichtung, zum Beispiel hakenartige Vorsprünge, besonders gut geschützt, etwa gegenüber Beschädigungen. Entsprechend kann so eine besonders sichere Verbindung zwischen Einhängeeinrichtung und Befestigungseinrichtung und damit zwischen Photovoltaikmodul und Wärmetauschermodul erreicht werden.

In einer weiteren bevorzugten Ausführungsform ist die Einhängeeinrichtung leistenartig und die profilartige Vertiefung derart ausgebildet, dass die leistenartige Einhängeeinrichtung im Wesentlichen vollständig in der profilartigen Vertiefung versenkbar ist. Dabei bildet die Einhängeeinrichtung vorzugsweise eine Leiste, zum Beispiel eine Hakenleiste, mit hakenartigen Vorsprüngen zum Eingreifen in die Befestigungseinrichtung, insbesondere in Befestigungsmittel der Befestigungseinrichtung. Dadurch kann sich die auf die Befestigungseinrichtung einwirkende Gewichtskraft des Photovoltaikmoduls, insbesondere gleichmäßig, über eine größere Fläche verteilen. Zudem ermöglicht die leistungsartig ausgebildete Einhängeeinrichtung eine besonders einfache Ausrichtung des Photovoltaikmoduls beim Einhängen in die Befestigungseinrichtung.

Die leistenartig ausgebildete Einhängeeinrichtung erstreckt sich bei Befestigung am Photovoltaikmodul in bevorzugter Weise in vertikaler Richtung, und zwar vorzugsweise im Wesentlichen von einer Oberkante bis zu einer Unterkante des Photovoltaikmoduls. Eine solche Ausdehnung der Einhängeeinrichtung ermöglicht die Verwendung weicher Materialien, insbesondere Metalle, etwa Aluminium, da sich die einwirkenden Kräfte so über eine größere Fläche verteilen und eine übermäßige, insbesondere großflächige, Verformung der Einhängeeinrichtung vermieden wird.

In einer weiteren bevorzugten Ausführungsform weist eine Rückwand der profilartigen Vertiefung Schlitze auf, in welche zumindest Teile der Einhängeeinrichtung eingreifen können. Die Schlitze in der Rückwand der Vertiefung bilden vorzugsweise Befestigungsmittel der Befestigungseinrichtung. Dabei sind die Schlitze in bevorzugter Weise derart ausgebildet, dass hakenartige Vorsprünge der Einhängeeinrichtung in die Schlitze eingreifen können und die Einhängeeinrichtung mittels der hakenartigen Vorsprünge in die Schlitze eingehängt werden kann. Dabei kann ein Ende eines Schlitzes als Kontaktabschnitt dienen, über den eine Kontaktfläche der Einhängeeinrichtung, insbesondere eine, vorzugsweise gekrümmte, Kontaktkante eines hakenartigen Vorsprungs der Einhängeeinrichtung, bis in eine Rastposition abgleiten kann. Das Vorsehen von Schlitzen in einer Rückwand der profilartigen Vertiefung ermöglicht dabei eine besonders präzise Positionierung des Photovoltaikmoduls beim Einhängen der Einhängeeinrichtung in die Befestigungseinrichtung.

In einer weiteren bevorzugten Ausführungsform ist die Befestigungseinrichtung zusätzlich zur Befestigung an der Fassade eingerichtet. Zu diesem Zweck kann die Befestigungseinrichtung zusätzlich zu Befestigungsmitteln, über welche die Einhängeeinrichtung hängend am Wärmetauschermodul befestigt werden kann, Fassadenbefestigungsmittel zu Befestigung an der Fassade aufweisen. Die Ausbildung der Befestigungseinrichtung zur Befestigung an der Fassade ist besonders vorteilhaft, da dann lediglich die Befestigungseinrichtung und nicht das gesamte Wärmetauschermodul zum Lastabtrag ausgelegt sein muss. Insbesondere ist es denkbar, lediglich die Befestigungseinrichtung zum Lastabtrag verstärkt, zum Beispiel dicker als das übrige Wärmetauschermodul, auszubilden. Dadurch kann Material gespart werden.

In einer weiteren bevorzugten Ausführungsform ist die Befestigungseinrichtung doppelwandig ausgebildet und weist eine hintere Rückwand auf, in die Ausnehmungen zur Befestigung der Befestigungseinrichtung an der Fassade eingelassen sind. Dadurch kann die Befestigungseinrichtung über die hintere Rückwand an der Fassade befestigt werden, etwa indem eine Tragleiste in die Ausnehmungen eingeführt und dort gegebenenfalls eingehakt wird, ohne dass das Eingreifen der Einhängeeinrichtung in die Befestigungseinrichtung, zum Beispiel von hakenartigen Vorsprüngen in Schlitze der (vorderen) Rückwand beeinträchtigt wird. Die Ausnehmungen in der hinteren Rückwand bilden in diesem Fall Fassadenbefestigungsmittel.

In einer weiteren bevorzugten Ausführungsform weist das Befestigungssystem des Weiteren (i) Justieranordnungen zur Befestigung an der Fassade und (ii) eine horizontal an einer Mehrzahl von Justieranordnungen fixierbare Tragschiene zur Befestigung des Wärmetauschermoduls an den Justieranordnungen auf. Dabei sind die Justieranordnungen vorzugsweise dazu eingerichtet, den Abstand und/oder die Orientierung des an der Tragschiene befestigten Wärmetauschermoduls relativ zur Fassade einzustellen. Die Justieranordnungen können dabei als Abstandshalter zwischen dem Wärmetauschermodul und der Fassade dienen und erlauben eine ausreichende Belüftung des Zwischenraums zwischen dem Wärmetauschermodul und der Fassade. Darüber hinaus kann der Zwischenraum zur Wandisolation genutzt werden, etwa indem Isolierelemente in den Zwischenraum eingebracht werden. Zudem ermöglicht das Vorsehen von Justieranordnungen und einer Tragschiene eine modulare Eindeckung der Fassade, wobei mittels der Justieranordnungen Unebenheiten in der Fassade leicht und zuverlässig ausgeglichen werden können.

In einer weiteren bevorzugten Ausführungsform weisen die Justieranordnungen jeweils einen Körper und zwei im Körper zumindest teilweise versenkbare Stellelemente mit jeweils einem Ablagekopf, an dem die Tragschiene anliegen kann, auf. Durch zumindest teilweises Versenken beider Stellelemente, etwa durch Einschrauben, ändert sich der Abstand zwischen der Tragschiene bzw. des an ihr befestigten Wärmetauschermoduls und der Fassade, während durch zumindest teilweises Versenken nur eines der beiden Stellelemente die Orientierung der Tragschiene bzw. des an ihr befestigten Wärmetauschermoduls relativ zur Fassade änderbar ist. Diese Anordnung aus Körper und Stellelementen erlaubt eine robuste und zugleich präzise Positionierung des an der Tragschiene befestigten Wärmetauschermoduls.

Der Körper kann dabei insbesondere stegartig ausgebildet sein und ein erstes Ende zu Befestigung an der Fassade, etwa mittels einer Verschraubung, und ein dem ersten Ende gegenüberliegendes zweites Ende, in dem die Stellelemente zumindest teilweise versenkbar sind, aufweisen. Dabei ist der Körper der Justieranordnungen vorzugsweise Z-förmig ausgebildet, wobei das erste Ende und das zweite Ende zwei zueinander parallele Abschnitte des Z-förmigen Körpers, insbesondere ebene Plattformen, bilden. Diese Ausprägung erleichtert insbesondere die Befestigung des Körpers an der Fassade, da das zweite Ende so besonders gut zugänglich ist.

In einer weiteren bevorzugten Ausführungsform weist die Tragschiene mehrere Durchgangsbohrungen auf, die jeweils von einem Fixierungselement einer Justieranordnung derart durchgriffen werden können, dass die Tragschiene mittels der Fixierungselemente klemmend an den Justieranordnungen befestigt werden kann. Vorzugsweise umfassen die Fixierungselemente dabei jeweils einen Schaft, dessen Durchmesser kleiner ist als die Durchgangsbohrungen, und einen Fixierkopf, dessen Durchmesser größer ist als die Durchgangsbohrungen, so dass der Schaft eine Durchgangsbohrung durchgreifen und im Körper zumindest teilweise versenkt, zum Beispiel eingeschraubt, werden kann. Dadurch kann die Tragschiene, welche an den Ablageköpfen der Stellelemente anliegt, einfach und zuverlässig zwischen dem Fixierkopf und den Ablageköpfen der Stellelemente eingeklemmt und dadurch sicher fixiert werden.

In einer weiteren bevorzugten Ausführungsform weist die Tragschiene einen Tragfuß auf, der dazu eingerichtet ist, derart in eine Ausnehmung der hinteren Rückwand der profilartigen Vertiefung oder gegebenenfalls ein anderes Fassadenbefestigungsmittel der Befestigungseinrichtung einzugreifen, dass das Wärmetauschermodul hängend an der Tragschiene befestigt werden kann. Der Tragfuß ist dabei vorzugsweise als hakenartige, insbesondere an einem unteren Ende der Tragschiene angeordnete, Leiste ausgebildet, an der das Wärmetauschermodul aufgehängt werden kann. Das Vorsehen eines Tragfußes an der Tragschiene erlaubt somit eine unkomplizierte und flexible Befestigung des Wärmetauschermoduls.

Zudem ist es denkbar, dass das an die Tragschiene gehängte Wärmetauschermodul entlang der vertikal fixierten Tragschiene verschiebbar ist, zum Beispiel um mit einer Feder in eine Nut eines benachbarten Wärmetauschermoduls eingeschoben werden zu können.

In einer weiteren bevorzugten Ausführungsform weist die Tragschiene Durchgangsbohrungen zum Durchführen zumindest eines Teils eines Werkzeugs auf, so dass das Werkzeug mit den Stellelementen wechselwirken kann. Dabei sind diese Durchgangsbohrungen vorzugsweise derart ausgebildet und auf der Tragschiene angeordnet, dass ein Teil des Ablagekopfes der Stellelemente freiliegt und ein Bereich um die Durchgangsbohrung herum an den Anlageköpfen anliegt. Dies erleichtert die Justage der Tragschiene bzw. des an ihr befestigten Wärmetauschermoduls. Vorteilhaft kann auch das Wärmetauschermodul mehrere Justagebohrungen zum Durchführen zumindest eines Teils eines Werkzeugs aufweisen, so dass das Werkzeug, wenn das Wärmetauschermodul an der Tragschiene aufgehängt ist, die Durchgangsbohrungen der Tragschiene durchgreifen und mit den Stellelementen wechselwirken kann. In bevorzugter Weise sind die Justagebohrungen dabei so am Wärmetauschermodul, insbesondere in der Rückwand und der hinteren Rückwand, angeordnet, dass sie mit den Durchgangsbohrungen der Tragschiene fluchten, wenn das Wärmetauschermodul in die Tragschiene eingehängt ist. Dies erlaubt eine, insbesondere nachträgliche, Ausrichtung der Wärmetauschermodule auch im montierten, d.h. in die Tragschiene eingehängten, Zustand, z.B. eine Nachjustage.

In einer weiteren bevorzugten Ausführungsform weist die Einhängeeinrichtung ein Sicherungsmittel zum Sichern des Photovoltaikmoduls auf. Das Sicherungsmittel kann insbesondere dazu eingerichtet sein, einen Teil des Photovoltaikmoduls, der nur mittelbar mit der Einhängeeinrichtung verbunden ist, etwa durch Abstützen, zu sichern. Beispielsweise kann das Sicherungsmittel dazu eingerichtet sein, eine Schicht einer Schichtanordnung wie etwa eine Glasscheibe, die über ein Verbundmaterial des Photovoltaikmoduls auf der photoaktiven Schicht des Moduls, z.B. dem Halbleitermaterial, aufliegt, zu sichern. Dadurch können Bauvorschriften erfüllt werden, die den Einsatz des Befestigungssystems an Fassaden z.B. in großen Höhen erlauben.

Das Sicherungsmittel kann dabei mit einem Teil der Einhängeeinrichtung, zum Beispiel mit einem leistenartigen Teil der Einhängeeinrichtung, insbesondere mit der Hakenleiste, verbunden sein, etwa durch Vernietung oder Verschraubung. Beim Aufkleben der Einhängeeinrichtung auf die Rückseite des Photovoltaikmoduls kann das Sicherungsmittel in die Verklebung, insbesondere in die linienförmige Verklebung integriert werden, d.h. in der Klebefuge zwischen Rückwand des Photovoltaikmoduls und Einhängeeinrichtung angeordnet sein. Dies ermöglicht eine besonders bauraumsparende Anordnung des Sicherungsmittels.

In einer weiteren bevorzugten Ausführungsform umfasst das Sicherungsmittel einen Winkel, der an einer Unterkante der Einhängeeinrichtung angeordnet und dazu eingerichtet ist, das Photovoltaikmodul zu untergreifen. Mit einer Unterkante ist vorliegend diejenige Kante gemeint, die beim Verbinden des Photovoltaikmoduls mit dem an der Fassade befestigten Wärmetauschermodul zuunterst angeordnet ist. Dabei verläuft der Winkel bei Befestigung der Einhängeeinrichtung am Photovoltaikmodul vorzugsweise abschnittsweise entlang der Rückseite des Photovoltaikmoduls und abschnittsweise entlang einer Unterkante des Photovoltaikmoduls. Dadurch kann das Photovoltaikmodul, insbesondere ein Teil des Photovoltaikmoduls wie etwa eine Glasscheibe, zuverlässig gegen seine Gewichtskraft abgestützt werden. Der Winkel kann zudem als Anschlag beim Befestigen der Einhängeeinrichtung an der Rückseite des Photovoltaikmoduls dienen, was eine besonders präzise Positionierung und Befestigung der Einhängeeinrichtung am Photovoltaikmodul ermöglicht.

In einer weiteren bevorzugten Ausführungsform umfasst das Befestigungssystem ein Sammelrohr, das zumindest teilweise an dem Sicherungsmittel befestigt und dazu eingerichtet ist, die Fluidkanäle mehrerer Wärmetauschermodule fluidleitend miteinander zu verbinden. Dieses Sammelrohr verläuft dabei vorzugsweise im Wesentlichen horizontal entlang einer Unterkante des mit dem an der Fassade befestigten Wärmetauschermodul verbundenen Photovoltaikmoduls, an dem die Einhängeeinrichtung befestigt ist. das Sicherungsmittel erfüllt damit zugleich zwei Aufgaben, nämlich die Sicherung des Photovoltaikmoduls oder zumindest Teilen davon sowie das zumindest teilweise Tragen des Sammelrohrs, wodurch das Sicherungsmittel besonders effizient genutzt werden kann.

Zusätzlich zur Befestigung am Sicherungsmittel, beispielsweise durch Verschraubung, kann das Sammelrohr auch Sammelrohrbefestigungsmittel aufweisen, über die das Sammelrohr auch direkt mit dem Photovoltaikmodul verbunden werden kann. Dadurch kann die mittelbare Befestigung des Photovoltaikmoduls an einer Gebäudefassade weiter verbessert, insbesondere gesichert, werden, insbesondere indem neben einer Verklebung der Einhängeeinrichtung mit dem Photovoltaikmodul eine zusätzliche Verbindung bereitgestellt wird.

Ein Hybridsolarmodul gemäß der Erfindung umfasst (i) ein Wärmetauschermodul zur Befestigung an einer Fassade, das mindestens einen Fluidkanal aufweist, und (ii) ein Photovoltaikmodul. Dabei weist das Wärmetauschermodul eine Befestigungseinrichtung und das Photovoltaikmodul auf seiner Rückseite eine zur Befestigungseinrichtung komplementär ausgebildete Einhängeeinrichtung auf. Die Einhängeeinrichtung ist dazu eingerichtet, so in die Befestigungseinrichtung einzugreifen, dass das Photovoltaikmodul am Wärmetauschermodul hängend befestigt werden kann, wobei die Einhängeeinrichtung in der Weise ausgebildet ist, dass das Photovoltaikmodul durch sein Eigengewicht flächig anliegend an das Wärmetauschermodul angepresst wird.

Ein Verfahren zur Befestigung von einem Hybridsolarmodulsystem gemäß den obigen Ausführunsgformen an einer Fassade nach der Erfindung weist die folgenden Schritte auf: (i) Befestigen von Justieranordnungen an der Fassade; (ii) horizontales Fixieren einer Tragschiene an einer Mehrzahl von Justieranordnungen; (iii) Befestigen eines Wärmetauschermoduls mit mindestens einem Fluidkanal an der Tragschiene; und (iv) Befestigen eines Photovoltaikmoduls am Wärmetauschermodul durch Einhängen einer auf der Rückseite des Photovoltaikmoduls befestigten Einhängeeinrichtung in eine zur Einhängeeinrichtung komplementär ausgebildeten Befestigungseinrichtung des Wärmetauschermoduls , wobei die Einhängeeinrichtung in der Weise ausgebildet ist, dass das Photovoltaikmodul durch sein Eigengewicht flächig anliegend an das Wärmetauschermodul angepresst wird.

In einer bevorzugten Ausführungsform weist das Verfahren des Weiteren den folgenden Schritt auf: Verbinden der Einhängeeinrichtung mit einem Photovoltaikmodul durch Verkleben der Einhängeeinrichtung auf einer Rückseite des Photovoltaikmoduls.

Die Erfindung wird im Folgenden anhand von Figuren näher erläutert. Es zeigen, zumindest teilweise schematisch:
- Fig. 1: ein Beispiel eines Befestigungssystems mit Einhängeeinrichtungen und einem Wärmetauschermodul;
- Fig. 2: ein Beispiel einer leistenartig ausgebildeten Einhängeeinrichtung in einer Seitenansicht;
- Fig. 3: zwei Querschnitte der in Fig. 2 dargestellten Einhängeeinrichtung;
- Fig. 4: ein Beispiel eines hakenförmigen Vorsprungs;
- Fig. 5: ein Beispiel einer Einhängeeinrichtung mit einem Sicherungsmittel;
- Fig. 6: ein Beispiel eines Wärmetauschermoduls mit einer Befestigungseinrichtung in einem Querschnitt;
- Fig. 7: ein Beispiel eines Befestigungssystems, mit dem Hybridsolarmodule an einer Fassade befestigt sind;
- Fig. 8: ein Beispiel einer Justieranordnung; und
- Fig. 9: ein Beispiel eines mittels einer Tragschiene und einer Justieranordnung an einer Fassade befestigen Wärmetauschermoduls in einer Seitenansicht.

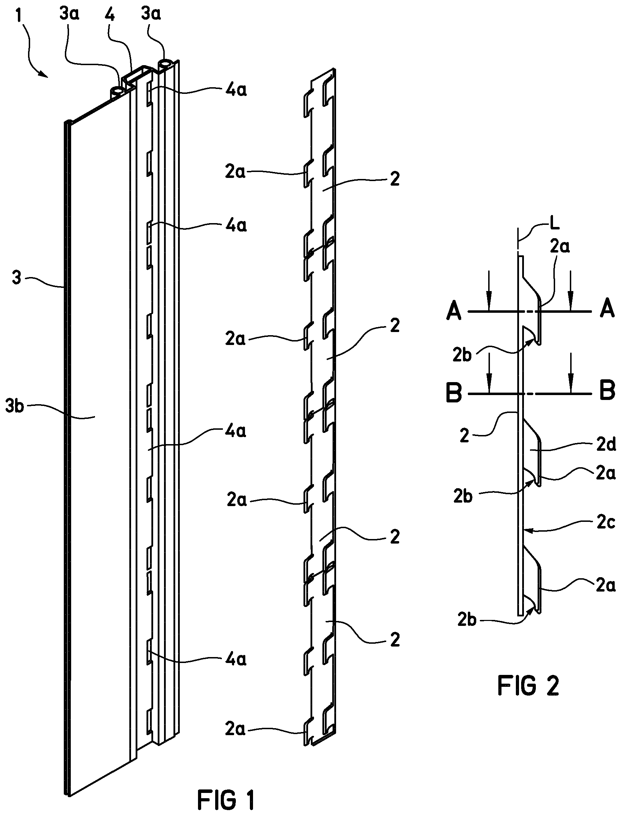

**Figur 1** zeigt ein Beispiel eines Befestigungssystems 1 mit vier Einhängeeinrichtungen 2 und einem Wärmetauschermodul 3, wobei die Einhängeeinrichtungen 2 zur Befestigung an jeweils einem Photovoltaikmodul (nicht dargestellt), etwa mittels Verklebung, eingerichtet sind und das Wärmetauschermodul 3 zwei in der dargestellten Ansicht auf der Rückseite des Wärmetauschermoduls verlaufende Fluidkanäle 3a und eine Befestigungseinrichtung 4 aufweist. Die Einhängeeinrichtung 2 ist dabei komplementär zur Befestigungseinrichtung 4 ausgebildet und dazu eingerichtet, derart in die Befestigungseinrichtung 4 einzugreifen, dass das Photovoltaikmodul mit der Einhängeeinrichtung hängend am Wärmetauschermodul 3 befestigt werden kann.

Zu diesem Zweck weisen die Einhängeeinrichtungen 2 hakenartige Vorsprünge 2a auf, die zur Befestigung der Einhängeeinrichtungen 2 in Befestigungsmitteln, z.B. zu den hakenartigen Vorsprüngen 2a komplementäre Schlitze 4a oder Stege, der Befestigungseinrichtung 4 eingehängt werden können, wobei aus Gründen der Übersichtlichkeit nicht alle der hakenartigen Vorsprünge 2a und Schlitze 4a mit Bezugszeichen versehen sind. Solche hakenartigen Vorsprünge 2a sind bevorzugt, da durch Einhängen in die Befestigungseinrichtung 4 auf einfache Weise eine flexible und zugleich sichere Verbindung zwischen den Photovoltaikmodulen und dem Wärmetauschermodul 3 erreicht werden kann, wobei die in der Befestigungseinrichtung 4 vorgesehenen Schlitze 4a im Zusammenspiel mit den hakenartigen Vorsprüngen 2a zugleich eine äußerst präzise Positionierung der mit den Einhängevorrichtungen 2 verbundenen Photovoltaikmodulen ermöglichen.

Dabei kann die Befestigungseinrichtung 4 und/oder können die Einhängeeinrichtungen 2 in der Weise ausgebildet sein, dass beim Einhängen ein vorgegebener Abstand zwischen den Einhängeeinrichtungen 2 bzw. den damit verbundenen Photovoltaikmodulen und dem Wärmetauschermodul 3 erzielt wird. Im vorliegenden Beispiel ist die Befestigungseinrichtung 4 integral mit dem Wärmetauschermodul 3, insbesondere als profilartige Vertiefung im Wärmetauschermodul 3, ausgebildet. Dadurch können die Einhängeeinrichtungen 2 beim Einhängen zumindest teilweise in der profilartigen Vertiefung versenkt werden, sodass die Photovoltaikmodule im Wesentlichen flächig am Wärmetauschermodul 3 anliegen können, d. h der vorgegebene Abstand im Wesentlichen auch verschwinden kann.

Zum Beispiel können die hakenartigen Vorsprünge 2a derart ausgebildet sein, etwa gerade so weit hervorragen, dass mit den Einhängeeinrichtungen 2 verbundene Photovoltaikmodule beim Einhängen und Versenken der Einhängeeinrichtungen 2 in der Befestigungseinrichtung 4 flächig an einer Wärmekopplungsfläche 3b des Wärmetauschermoduls 3 anliegen. Dadurch kann die Wärmekopplung von den Photovoltaikmodulen über die Wärmekopplungsfläche 3b aufgrund des verschwindenden Abstands zwischen Wärmetauschermodul 3 und Photovoltaikmodulen besonders groß sein.

Wie in Figur 1 dargestellt sind die Einhängeeinrichtungen 2 vorzugsweise leistenartig, insbesondere als Hakenleisten, ausgebildet, sodass sie durch linienförmige Verklebungen mit jeweils einem Photovoltaikmodul verklebt werden können. Diese Ausbildung ist besonders vorteilhaft, da auf diese Weise ein guter Kompromiss zwischen der durch die leistenartige Einhängeeinrichtung 2 verdeckten Fläche auf einem Photovoltaikmodul, die zur Wärmekopplung nicht oder nur beschränkt zur Verfügung steht, und durch die Verbindung dem möglichen Kraftabtrag erzielt werden kann.

Die hakenartigen Vorsprünge 2a sind jeweils paarweise vorgesehen und erstrecken sich abschnittsweise entlang den beiden Längsseiten der leistenartigen Einhängeeinrichtungen 2. Die paarweise Anordnung der hakenartigen Vorsprünge 2a ermöglicht eine Stabilisierung der Ausrichtung der Einhängeeinrichtungen 2 in der länglichen profilartigen Vertiefung der Befestigungseinrichtung 4. Insbesondere sind pro Einhängeeinrichtung 2 drei Paare von Vorsprüngen 2a, d. h. insgesamt sechs hakenartige Vorsprünge 2a vorgesehen. Es hat sich gezeigt, dass diese Konfiguration der Einhängeeinrichtungen 2 einen guter Kompromiss zwischen Komplexität einer Einhängeeinrichtung 2, insbesondere der zur Herstellung benötigten Materialmenge, und der Robustheit der erzielten Befestigung, insbesondere des möglichen Kraftabtrags, ermöglicht.

**Figur 2** zeigt ein Beispiel einer leistenartig, insbesondere als Hakenleiste, ausgebildeten Einhängeeinrichtung 2 mit drei Paaren von hakenartigen Vorsprüngen 2a in einer Seitenansicht, wobei nur jeweils einer der Vorsprünge 2a jedes Paars sichtbar ist. Im gezeigten Beispiel weist jeder der hakenartigen Vorsprünge 2a eine Hakenfläche 2d mit einer, insbesondere gegenüber einer Längsachse L der Einhängeeinrichtung 2 abgeschrägten, Kontaktkante 2b auf. Die Hakenfläche 2d verläuft dabei im Wesentlichen parallel zur Längsachse L. Die Kontaktkante 2b der Hakenfläche 2d ist vorzugsweise dazu eingerichtet, mit einer Befestigungseinrichtung, insbesondere mit einem unteren Ende eines Schlitzes der Befestigungseinrichtung (siehe Figur 1), eines Wärmetauschermoduls in Kontakt zu treten, wenn die Hakenfläche 2d in den Schlitz eingeführt und gegebenenfalls parallel zur Längsachse L verschoben, insbesondere auf dem unteren Ende des Schlitzes abgelegt, wird.

Das untere Ende des Schlitzes kann dabei als Kontaktabschnitt dienen, über welchen die Kontaktkante 2b der Hakenfläche 2d abgleiten kann, bis eine den hakenartigen Vorsprüngen 2a zugewandte Kontaktfläche 2c der Einhängeeinrichtung 2 an der Befestigungseinrichtung anschlägt bzw. anliegt. In dieser Rastposition fixiert das Eigengewicht der Einhängeeinrichtung 2, insbesondere eines mit der Einhängeeinrichtung 2 verbundenen Photovoltaikmoduls, die Einhängeeinrichtung 2 in der Befestigungseinrichtung.

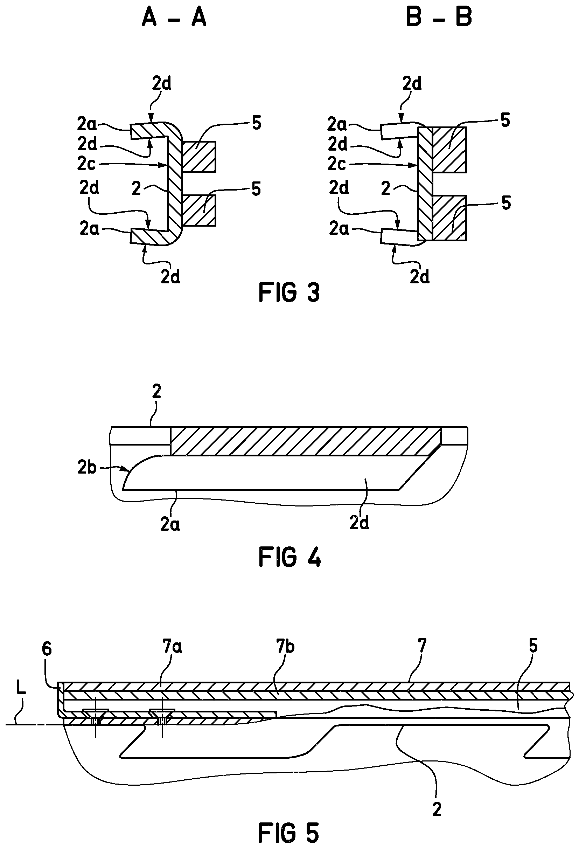

**Figur 3** zeigt zwei Querschnitte A-A, B-B der in Figur 2 dargestellten leistenartigen Einhängeeinrichtung 2. Dabei verläuft der Querschnitt A-A durch ein Paar der hakenartigen Vorsprünge 2a. Der Querschnitt B-B verläuft durch einen Abschnitt zwischen zwei Paaren von hakenartigen Vorsprüngen 2a.

Die Hakenflächen 2d der hakenartigen Vorsprünge 2a sind gegenüber der Kontaktfläche 2c um einen Winkel geneigt, und zwar vorzugsweise in der Weise, dass die hakenartigen Vorsprünge 2a zumindest teilweise in der, insbesondere als profilartige Vertiefung ausgebildeten, Befestigungseinrichtung versenkt werden können. Die Hakenflächen 2d können insbesondere derart geneigt sein, dass sich ein Formschluss beim zumindest teilweisen Versenken der Einhängeeinrichtung 2 in der Befestigungseinrichtung ergibt. Beispielsweise können die Hakenflächen 2d zwischen 80° und 89,5°, bevorzugt zwischen 82° und 88°, insbesondere zwischen 84° und 86° gegenüber der Kontaktfläche 2c geneigt sein.

Auf einer der Kontaktfläche 2c gegenüberliegenden Seite der Einhängeeinrichtung 2, die von den hakenartigen Vorsprüngen 2a abgewandt ist, kann die Einhängeeinrichtung 2 am Photovoltaikmodul befestigt, insbesondere verklebt, werden. Vorzugsweise werden dabei zwei linienartige Verklebungen 5 entlang der Längsachse der Einhängeeinrichtung 2, welche in der gezeigten Ansicht senkrecht zur Figurenebene verläuft, gezogen. Um die Einhängeeinrichtung 2 präzise vom Photovoltaikmodul beabstanden zu können, sind in bevorzugter Weise Abstandshalter in die Klebefuge zwischen der Einhängeeinrichtung 2, insbesondere der von den hakenartigen Vorsprüngen 2a abgewandten Seite, und dem Photovoltaikmodul vorzusehen, die nach dem Aushärten der zwei linienartigen Verklebungen 5 wieder entfernt werden können.

**Figur 4** zeigt ein Beispiel eines hakenartigen Vorsprungs 2a einer nur ausschnittsweise dargestellten Einhängeeinrichtung 2 zum Einhängen in eine Befestigungseinrichtung eines Wärmetauschermoduls (siehe Figur 1). Der hakenartige Vorsprung 2a umfasst eine Hakenfläche 2d, die eine gekrümmte Kontaktkante 2b aufweist. Die Hakenfläche 2d kann beispielsweise in einen Schlitz der Befestigungseinrichtung eingreifen, wobei ein unteres Ende des Schlitzes als Kontaktabschnitt der Befestigungseinrichtung dienen und mit der Kontaktkante 2b in Kontakt treten kann. Die Einhängeeinrichtung 2 kann über die Kontaktkante 2b des hakenartigen Vorsprungs 2a ableiten, wobei die Einhängeeinrichtung 2 und gegebenenfalls ein mit der Einhängeeinrichtung 2 verbundenes Photovoltaikmodul so an die Befestigungseinrichtung herangezogen wird, dass das Photovoltaikmodul flächig am Wärmetauschermodul anliegt. Dadurch kann die Wärmekopplung zwischen Photovoltaikmodul und Wärmetauschermodul verbessert werden.

Die gekrümmte Form der Kontaktkante 2b ist besonders bevorzugt, da sie zu einem ansteigenden Anzugsmoment führt, je weiter die Hakenfläche 2d über die Kontaktkante 2b in den Schlitz abgleitet. Die Krümmung der Kontaktkante 2b kann beispielsweise im Wesentlichen kreisförmig sein. Dadurch ergibt sich ein im Wesentlichen exponentielles Ansteigen des Anzugsmoments beim Abgleiten über die Kontaktkante 2b. Eine solches Ansteigen des Anzugsmoments führt zu einer Art "Einrasten" des hakenartigen Vorsprungs 2a z.B. in dem Schlitz der Befestigungseinrichtung, sodass die Einhängeeinrichtung 2 in einer Rastposition, in der das Photovoltaikmodul vorzugsweise flächig am Wärmetauscher anliegt, durch das Eigengewicht des Photovoltaikmoduls besonders zuverlässig fixiert wird.

**Figur 5** zeigt ein Beispiel einer abschnittsweise dargestellten Einhängeeinrichtung 2 mit einem Sicherungsmittel 6 zum Sichern eines Photovoltaikmoduls 7, welches mittels einer Verklebung 5 mit der Einhängeeinrichtung 2 verbunden ist.

Bei dem Photovoltaikmodul 7 kann es sich beispielsweise um ein kristallines Photovoltaikmodul oder um ein Dünnschichtmodul handeln. Beiden Modultypen ist gemein, dass eine Glasschicht 7a, die auch als Frontglas bezeichnet wird, mittels einer Schicht aus einem Verbundmaterial (nicht dargestellt) mit einer photoaktiven Schicht 7b, zum Beispiel einer kristallinen oder Halbleiterschicht, verbunden ist. Bauliche Vorschriften können es notwendig machen, einen Teil des Photovoltaikmoduls 7, insbesondere die Glasschicht 7a bzw. das Frontglas, zusätzlich zur Verklebung 5 abzusichern.

Im vorliegenden Beispiel wird dies durch eine winkelartige Ausbildung des Sicherungsmittels 6 erreicht, welche das Photovoltaikmodul 7, insbesondere die Glasschicht 7a, an einem unteren Ende des mit einem an einer Fassade befestigten Wärmetauschermodul verbundenen Photovoltaikmoduls 7 untergreift und damit gegen die Gewichtskraft abstützen kann. Das Sicherungsmittel 6 ist dabei mit der Einhängeeinrichtung 2 verbunden, im dargestellten Beispiel verschraubt. Der parallel zur Längsachse L der Einhängeeinrichtung 2 verlaufende Abschnitt des Sicherungsmittels 6 ist dabei in der Klebefuge zwischen der Rückseite des Photovoltaikmoduls 7 und der Einhängeeinrichtung 2 angeordnet, sodass Bauraum gespart werden kann.

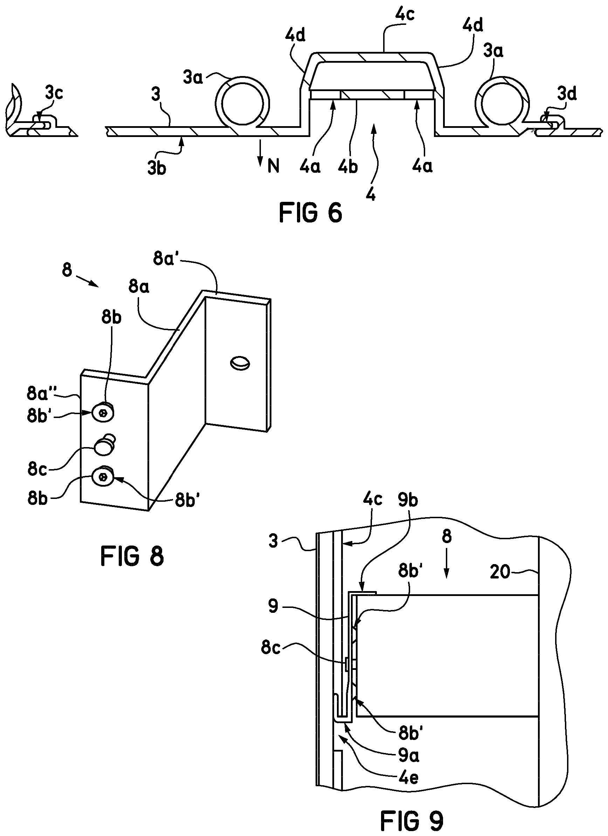

**Figur 6** zeigt in einem Querschnitt ein Beispiel eines Wärmetauschermoduls 3 mit zwei Fluidkanälen 3a zum Führen eines Kühlmittels und einer Befestigungseinrichtung 4, in die eine Einhängeeinrichtung (siehe Figur 1) derart eingreifen kann, dass die Einhängeeinrichtung und gegebenenfalls ein mit der Einhängeeinrichtung verbundenes Photovoltaikmodul hängend an der Befestigungseinrichtung 4 befestigt werden kann. Die Befestigungseinrichtung 4 ist dabei integral mit dem Wärmetauschermodul 3 als profilartige Vertiefung ausgebildet, die sich entlang einer Längsachse des Wärmetauschermoduls 3 erstreckt. Im gezeigten Beispiel verläuft die Längsachse senkrecht zu Figurenebene.

Die Befestigungseinrichtung 4 weist eine geschlitzte Rückwand 4b mit Schlitzen 4a auf, in welche die Einhängeeinrichtung, insbesondere hakenförmigen Vorsprünge der Einhängeeinrichtung (siehe Figuren 2 und 4), eingreifen kann. Wie im Zusammenhang mit den Figuren 2 und 4 beschrieben, sind die hakenförmigen Vorsprünge in bevorzugter Weise derart ausgebildet, dass die Einhängeeinrichtung durch ihr Eigengewicht bzw. das Eigengewicht des mit ihr verbundenen Photovoltaikmoduls an das Wärmetauschermodul 3 bzw. die Befestigungseinrichtung 4 heran-, insbesondere in die profilartige Vertiefung hinein-, gezogen wird. Die Einhängeeinrichtung kann dabei insbesondere an die Befestigungseinrichtung 4 herangezogen werden, bis eine Kontaktfläche der Einhängeeinrichtung an der Rückwand 4b anschlägt bzw. anliegt. Dabei ist die Einhängeeinrichtung und/oder die Befestigungseinrichtung 4 vorzugsweise derart ausgebildet, dass das Photovoltaikmodul flächig an eine Wärmekopplungsfläche 3b des Wärmetauschermoduls°3 angepresst wird.

Die Befestigungseinrichtung 4 weist neben der Rückwand 4b auch eine hintere Rückwand 4c auf. Diese hintere Rückwand 4c kann insbesondere zur Befestigung an einer Fassade eingerichtet sein, etwa entsprechende Fassadenbefestigungsmittel aufweisen. Dabei ist die hintere Rückwand 4c vorzugsweise derart angeordnet, dass ein Teil der Einhängeeinrichtung, insbesondere hakenartige Vorsprünge der Einhängeeinrichtung, in den Zwischenraum zwischen der Rückwand 4b und der hinteren Rückwand 4c eingeführt werden können, ohne die Befestigung an der Fassade zu beeinträchtigen.

Die Rückwand 4b und die hintere Rückwand 4c bilden die profilartige Vertiefung zusammen mit zwei Seitenwänden 4d. Im Abschnitt zwischen der Wärmekopplungsfläche 3b und der Rückwand 4b verlaufen die Seitenwände 4d vorzugsweise im Wesentlichen geradlinig und parallel zueinander. Der Zwischenraum zwischen den zwei Seitenwänden 4d in diesem Abschnitt, d.h. auf einer von der hinteren Rückwand 4c abgewandten Seite der Rückwand 4b, ist dabei in bevorzugter Weise derart ausgebildet, dass die Einhängeeinrichtung, vorzugsweise zusammen mit Verklebungen, über welche die Einhängeeinrichtung mit dem Photovoltaikmodul verbunden ist, darin versenkt werden kann.

Im Abschnitt zwischen der Rückwand 4b und der hinteren Rückwand 4c verlaufen die Seitenwände 4d dagegen vorzugsweise gekrümmt oder sind zumindest unter einem Winkel gegen die Flächennormale N des Wärmetauschermoduls 3, insbesondere der Wärmekopplungsfläche 3b, geneigt. Insbesondere können die Seitenwände 2d diesem Abschnitt derart geneigt sein, dass sich die profilartige Vertiefung zur hinteren Rückwand 4c hin verjüngt. Diese Ausprägung der Befestigungseinrichtung 4 ist besonders vorteilhaft, um die in die Befestigungseinrichtung 4 eingreifende Einhängeeinrichtung in der Befestigungseinrichtung 4 präzise zu positionieren, insbesondere zu zentrieren. Dazu ist die Einhängeeinrichtung vorzugsweise komplementär zur Befestigungseinrichtung 4 ausgebildet. Beispielsweise können zu diesem Zweck die Hakenflächen von hakenartigen Vorsprüngen der Einhängeeinrichtung unter einem Winkel relativ zur Kontaktfläche der Einhängeeinrichtung geneigt ausgebildet sein, wie im Zusammenhang mit Figur 4 erläutert wurde, wobei der Neigungswinkel der Hakenflächen vorzugsweise dem Neigungswinkel der Seitenflächen 4d entspricht und so ein Formschluss zwischen der Einhängeeinrichtung und der Befestigungseinrichtung 4 erreicht werden kann.

Alternativ ist es auch denkbar, die Seitenwände 4d auch im Abschnitt zwischen der Rückwand 4b und der hinteren Rückwand 4c im Wesentlichen geradlinig und parallel zueinander auszubilden, etwa zur Vereinfachung des entsprechenden Herstellungsverfahrens.

Das Wärmetauschermodul 3 weist im dargestellten Beispiel an einer Längsseite eine Nut 3c auf, die parallel zur Längsachse des Wärmetauschermoduls 3 verläuft. Auf einer der Nut 3c gegenüberliegenden Längsseite weist das Wärmetauschermodul 3 eine Feder 3d auf, die ebenfalls parallel zur Längsachse des Wärmetauschermoduls 3 verläuft. Mittels der Nut 3c und/oder Feder 3d kann das Wärmetauschermodul 3 flexibel und auf einfache Weise mit anderen Wärmetauschermodulen, die in Figur 6 teilweise dargestellt sind, verbunden werden, beispielsweise um eine Fassade auszukleiden.

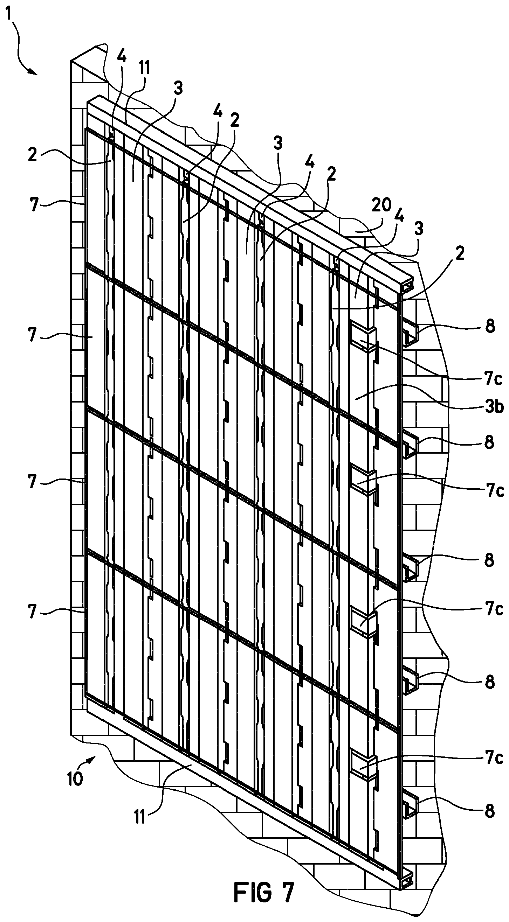

**Figur 7** zeigt ein Beispiel eines Befestigungssystems 1, mit dem vier Hybridsolarmodule 10 aus jeweils einem Photovoltaikmodul 7 und Wärmetauschermodulen 3 an einer Fassade 20 befestigt sind. Zur besseren Übersichtlichkeit sind die Photovoltaikmodule 7 transparent dargestellt, sodass die zwischen den Photovoltaikmodulen 7 und der Fassade angeordneten Wärmetauschermodule 3 sichtbar sind. Zudem wurden nicht alle dargestellten Elemente mit Bezugszeichen versehen.

Die Photovoltaikmodule 7 sind auf ihrer den Wärmetauschermodulen 3 bzw. der Fassade 20 zugewandten Rückseite mit jeweils vier Einhängeeinrichtungen 2 verbunden und über die Einhängeeinrichtungen 2 in komplementär zu den Einhängeeinrichtungen 2 ausgebildete Befestigungseinrichtung 4 der Wärmetauschermodule 3 eingehängt. Die Wärmetauschermodule 3 werden dabei von zwei Sammelrohre 11 eingefasst, welche die Fluidkanäle der Wärmetauschermodule 3 (in der gezeigten Ansicht der Fassade 20 zugewandt und daher nicht sichtbar) flüssigleitend miteinander verbinden und über die beispielsweise die gewonnene Wärme abgeführt werden kann.

Die Wärmetauschermodule 3 weisen jeweils Wärmekopplungsflächen 3b auf, an denen die Rückseiten der Photovoltaikmodule 7 zur Kopplung erzeugter Wärme vorzugsweise flächig anliegen. Eines der Wärmetauschermodule 3 weist Anschlussausnehmungen in seiner Wärmekopplungsfläche 3b auf, in denen jeweils eine Anschlusseinrichtung 7c der Photovoltaikmodule 7 angeordnet ist. Über die Anschlusseinrichtungen 7c können die Photovoltaikmodule 7 elektrisch kontaktiert werden, etwa um eine mittels der Photovoltaikmodule 7 erzeugte elektrische Spannung abgreifen zu können.

Die Wärmetauschermodule 3 sind über Justieranordnungen 8, die im dargestellten Beispiel U-förmig ausgebildet sind, mit der Fassade 20 verbunden. Die Justieranordnungen 8 sind dabei Teil des Befestigungssystems 1 und dazu eingerichtet, die Einstellung eines Abstands und/oder einer Orientierung der Wärmetauschermodule 10 relativ zur Fassade zu ermöglichen, und dienen gleichzeitig als Abstandshalter zwischen den Wärmetauschermodulen 3 und der Fassade 20, sodass die Hybridsolarmodule 10 hinterlüftet werden können.

**Figur 8** zeigt ein Beispiel einer Justieranordnung 8, welche Z-förmig ausgebildet ist. Die Justieranordnung 8 weist einen Körper 8a auf mit einem ersten Ende 8a' zur Befestigung an einer Fassade (siehe Figur 7) und einem dem ersten Ende 8a' gegenüberliegenden zweiten Ende 8a", an dem ein Wärmetauschermodul (nicht gezeigt) befestigt werden kann. Das erste Ende 8a' weist dabei eine Durchgangsbohrung auf, über welche die Justieranordnung 8 mit der Fassade beispielsweise verschraubt werden kann. Die Justieranordnung 8 ist zudem derart eingerichtet, dass ein Abstand und/oder eine Orientierung des Wärmetauschermoduls relativ zur Fassade eingestellt werden kann.

Zu diesem Zweck weist die Justieranordnung 8 zwei Stellelemente 8b auf, die im Körper 8a des Justieranordnung 8, insbesondere im zweiten Ende 8a", versenkbar sind. Im dargestellten Beispiel sind dabei nur Ablageköpfe 8b' der Stellelemente 8b sichtbar, da die Stellelemente 8b nahezu vollständig im Körper 8a versenkt, beispielsweise eingeschraubt, sind.

Die Ablageköpfe 8b' dienen als Anschlag für eine Tragschiene (siehe Figur 9), über die das Wärmetauschermodul mit dem Justierelement 8 und damit auch der Fassade verbunden werden kann. Wenn die Stellelemente 8b weiter im Körper 8a versenkt, also beispielsweise eingeschraubt, werden, verringert sich der Abstand zwischen der Tragschiene und damit dem Wärmetauschermodul und der Fassade. Wenn die Stellelemente 8b dagegen weniger tief im Körper 8a versenkt, also beispielsweise herausgeschraubt, werden, erhöht sich der Abstand zwischen der Tragschiene und damit dem Wärmetauschermodul und der Fassade. Wenn dagegen nur eines der beiden Stellelemente 8b heraus- oder eingeschraubt wird, ändert sich die Orientierung der Tragschiene und damit des Wärmetauschermoduls relativ zur Fassade. Insbesondere kann dadurch die Tragschiene bzw. das Wärmetauschermodul relativ zur Fassade geneigt werden.

Um die Tragschiene im gewünschten bzw. eingestellten Abstand bzw. in der gewünschten bzw. eingestellten Orientierung relativ zur Fassade zu fixieren und damit an der Justieranordnung 8 zu befestigen, weist die Justieranordnung 8 ein Fixierungselement 8c auf. Das Fixierungselement 8c kann beispielsweise als Schraube ausgebildet sein, die eine Durchgangsbohrung der Tragschiene durchgreifen und in den Körper 8a der Justieranordnung 8, insbesondere in das zweite Ende 8a", zwischen den beiden Stellelementen 8b eingeschraubt werden kann. Die Tragschiene kann dadurch zwischen einem Fixierkopf 8c' des Fixierungselements 8c und den Ablageköpfen 8b' der Stellelemente 8b klemmend fixiert werden.

**Figur 9** zeigt ein Beispiel eines mittels einer Tragschiene 9 und einer Justieranordnung 8 an einer Fassade 20 befestigten Wärmetauschermoduls 3 in einer Seitenansicht. Dabei ist das Wärmetauschermodul 3 in die Tragschiene 9 eingehängt, welche in einem gewünschten bzw. vorgegebenen Abstand und/oder einer gewünschten bzw. vorgegebenen Orientierung relativ zur Fassade 20 am Justierelement 8 klemmend fixiert ist. Dabei liegt die Tragschiene 9 an Ablageköpfen 8b' von Stellelementen der Justieranordnung 8 an, während sie auf einer von der Justieranordnung 8 abgewandten Seite von einem Fixierkopf eines Fixierungselements 8c gegen die Ablageköpfe 8b' gepresst wird. Die Justieranordnung 8, welche beispielsweise mit der Fassade 20 verschraubt sein kann, dient auch als Abstandshalter zwischen dem Wärmetauschermodul 3 und der Fassade 20.

Das Wärmetauschermodul 3 kann dabei auf einer der Fassade 20 zugewandten Seite, insbesondere in einer hinteren Rückwand 4c einer als profilartige Vertiefung ausgebildeten Befestigungseinrichtung des Wärmetauschermoduls 3, eine Ausnehmung 4e aufweisen, in die ein Teil der Tragschiene 9, insbesondere ein Tragfuß 9a der Tragschiene 9, eingreifen kann, sodass das Wärmetauschermodul 3 hängend an der Tragschiene 9 befestigbar ist. Der Tragfuß 9a erstreckt sich dabei entlang einer Unterkante der Tragschiene 9, insbesondere parallel zu einer in der gezeigten Ansicht senkrecht zu Figurenebene verlaufenden Längsachse der Tragschiene 9.

Die Ausnehmung 4e des Wärmetauschermoduls 3 kann dazu zumindest abschnittsweise komplementär zum Tragfuß 9a der Tragschiene 9 ausgebildet sein, etwa hakenförmig. Vorzugsweise ist die Ausnehmung 4e des Wärmetauschermoduls 3 derart ausgebildet, erstreckt sich z.B. bis in Seitenwände der profilartigen Vertiefung der Befestigungseinrichtung (siehe Figur 6), dass das Wärmetauschermodul 3 entlang der Tragschiene 9 horizontal, d. h. senkrecht zur Figurenebene, verschiebbar ist. Dadurch kann das in die Tragschiene 9 eingehängte Wärmetauschermodul 3 leicht über die in Figur 6 gezeigte Nut und Feder des Wärmetauschermoduls 3 mit anderen benachbart angeordneten Wärmetauschermodulen (nicht gezeigt) verbunden werden.

Die Tragschiene 9 kann einen Ablagesteg 9b aufweisen, der sich vorzugsweise entlang einer Oberkante der Tragschiene 9, insbesondere parallel zur Längsachse der Tragschiene 9. Der Ablagesteg 9b ist somit in bevorzugter Weise an einer der Unterkante, an welcher der Tragfuß 9a angeordnet ist, gegenüberliegenden Kante der Tragschiene 9 angeordnet und zum Lastabtrag eingerichtet. Mit anderen Worten ist der Ablagesteg 9b derart ausgebildet, dass er die Justieranordnung 8 im montierten Zustand abschnittsweise übergreift. Dadurch kann die Tragschiene 9, welche das Wärmeträgermodul 3 und gegebenenfalls auch ein am Wärmeträgermodul 3 eingehängtes Photovoltaikmodul trägt, am Justierelement 8 abgestützt werden, wie in Figur 9 gut zu erkennen ist.

Um eine flexiblere und/oder präzisere Positionierung der Tragschiene 9, insbesondere in vertikaler Richtung, zu ermöglichen, ist es auch denkbar, Abstandselemente (nicht gezeigt) vorzusehen, die zwischen dem Körper 8a des Justierelements 8 und den Ablagesteg 9b angeordnet, z.B. eingeschoben, sind. Bei den Abstandselementen kann es sich etwa um plattenförmige Abstandselemente handeln, die gegebenenfalls auch übereinander stapelbar sind, um einen größeren Versatz der Tragschiene 9 relativ zu den Justierelementen 8 in vertikaler Richtung zu ermöglichen.

### Bezugszeichenliste

- 1: Befestigungssystem

- 2: Einhängeeinrichtung
- 2a: hakenartige Vorsprünge
- 2b: Kontaktkante
- 2c: Kontaktfläche
- 2d: Hakenfläche

- 3: Wärmetauschermodul
- 3a: Fluidkanal
- 3b: Wärmeaustauschfläche
- 3c: Nut
- 3d: Feder

- 4: Befestigungseinrichtung
- 4a: Schlitze
- 4b: Rückwand
- 4c: hintere Rückwand
- 4d: Seitenwand
- 4e: Ausnehmung

- 5: Verklebung
- 6: Sicherungsmittel

- 7: Photovoltaikmodul
- 7a: Glasschicht
- 7b: photoaktive Schicht
- 7c: Anschlusseinrichtung

- 8: Justierelement
- 8a: Körper
- 8a', 8a": erstes, zweites Ende
- 8b: Stellelement
- 8b': Ablagekopf
- 8c: Fixiermittel

- 9: Tragschiene
- 9a: Tragfuß
- 9c: Ablagesteg

- 11: Sammelrohr
- 10: Hybridsolarmodul

- 20: Fassade

- L: Längsachse der Einhängeeinrichtung
- N: Flächennormale des Wärmetauschermoduls

## Patentansprüche

1. Befestigungssystem (1) für ein Hybridsolarmodulsystem, aufweisend ein Wärmetauschermodul (3) zur Befestigung an einer Fassade (20), das mindestens einen Fluidkanal (3a) und eine Befestigungseinrichtung (4) aufweist,
**gekennzeichnet durch**
eine Einhängeeinrichtung (2) zur Befestigung an einer Rückseite eines Photovoltaikmoduls (7), wobei die Einhängeeinrichtung (2) komplementär zur Befestigungseinrichtung (4) ausgebildet und dazu eingerichtet ist, so in die Befestigungseinrichtung (4) einzugreifen, dass das Photovoltaikmodul (7) mit der Einhängeeinrichtung (2) am Wärmetauschermodul (3) hängend befestigt werden kann, wobei die Einhängeeinrichtung (2) in der Weise ausgebildet ist, dass das Photovoltaikmodul (7) durch sein Eigengewicht flächig anliegend an das Wärmetauschermodul (3) angepresst wird.

2. Befestigungssystem (1) nach Anspruch 1, **dadurch gekennzeichnet, dass** die Einhängeeinrichtung (2) in der Weise ausgebildet ist, dass das Eigengewicht des Photovoltaikmoduls (7) die Einhängeeinrichtung (2) beim Eingreifen in die Befestigungseinrichtung (4) in der Befestigungseinrichtung (4) und damit das Photovoltaikmodul (7) in einem vorgegebenen Abstand zum Wärmetauschermodul (3) fixiert.

3. Befestigungssystem (1) nach einem der vorangehenden Ansprüche, **dadurch gekennzeichnet, dass** die Einhängeeinrichtung (2) hakenartige Vorsprünge (2a) aufweist, welche dazu eingerichtet sind, in die Befestigungseinrichtung (4) einzugreifen.

4. Befestigungssystem (1) nach Anspruch 3, **dadurch gekennzeichnet, dass** die hakenartigen Vorsprünge (4) jeweils eine zumindest abschnittsweise gekrümmte Kontaktkante (2b) aufweisen, über welche die Einhängeeinrichtung (2) beim Einhängen in die Befestigungseinrichtung (3) bis in eine Rastposition, in der das Photovoltaikmodul (7) im vorgegebenen Abstand zum Wärmetauschermodul (3) fixiert ist, abgleiten kann.

5. Befestigungssystem (1) nach einem der vorangehenden Ansprüche, **dadurch gekennzeichnet, dass** die Einhängeeinrichtung (2) durch Aufkleben auf die Rückseite des Photovoltaikmoduls (7) am Photovoltaikmodul (7) befestigbar ist.

6. Befestigungssystem (1) nach einem der vorangehenden Ansprüche, **dadurch gekennzeichnet, dass** die Einhängeeinrichtung (2) leistenartig und die Befestigungseinrichtung (4) als profilartige Vertiefung im Wärmetauschermodul (3), die sich parallel zum mindestens einen Fluidkanal (2a) erstreckt, derart ausgebildet ist, dass die leistenartige Einhängeeinrichtung (2) im Wesentlichen vollständig in der profilartigen Vertiefung versenkbar ist.

7. Befestigungssystem (1) nach Anspruch 6, **dadurch gekennzeichnet, dass** eine Rückwand (4b) der profilartigen Vertiefung Schlitze (4a) aufweist, in welche zumindest Teile der Einhängeeinrichtung (2) eingreifen können.

8. Befestigungssystem (1) nach einem der vorangehenden Ansprüche, **dadurch gekennzeichnet, dass** die Befestigungseinrichtung (4) doppelwandig ausgebildet ist und eine hintere Rückwand (4c) aufweist, in die Ausnehmungen (4e) zur Befestigung der Befestigungseinrichtung (4) an der Fassade (20) eingelassen sind.

9. Befestigungssystem (1) nach einem der vorangehenden Ansprüche, **gekennzeichnet durch**
- Justieranordnungen (8) zur Befestigung an der Fassade (20) und
- eine horizontal an einer Mehrzahl von Justieranordnungen (8) fixierbare Tragschiene (9) zu Befestigung des Wärmetauschermoduls (3) an den Justieranordnungen (8), wobei die Justieranordnungen (8) dazu eingerichtet sind, den Abstand und/oder die Orientierung des an der Tragschiene (9) befestigten Wärmetauschermoduls (3) relativ zur Fassade (20) einzustellen.

10. Befestigungssystem (1) nach Anspruch 9, **dadurch gekennzeichnet, dass** die Justieranordnungen (8) jeweils einen Körper (8a) und zwei im Körper (8a) zumindest teilweise versenkbare Stellelemente (8b) mit jeweils einem Ablagekopf (8b'), an dem die Tragschiene (9) anliegen kann, aufweisen, wobei die Tragschiene (9) mehrere Durchgangsbohrungen aufweist, die jeweils von einem Fixierungselement (8c) einer Justieranordnung (8) derart durchgriffen werden können, dass die Tragschiene (9) mittels der Fixierungselemente (8c) klemmend an den Justieranordnungen (8) befestigt werden kann.

11. Befestigungssystem (1) nach Anspruch 8 und einem der Ansprüche 9 oder 10, **dadurch gekennzeichnet, dass** die Tragschiene (9) einen Tragfuß (9a) aufweist, der dazu eingerichtet ist, derart in eine Ausnehmung (4e) der hinteren Rückwand (4c) der profilartigen Vertiefung einzugreifen, dass das Wärmetauschermodul (3) hängend an der Tragschiene (9) befestigt werden kann.

12. Befestigungssystem (1) nach einem der vorangehenden Ansprüche, **dadurch gekennzeichnet, dass** die Einhängeeinrichtung (2) ein Sicherungsmittel (6) zum Sichern des Photovoltaikmoduls (7) aufweist, wobei das Sicherungsmittel (6) einen Winkel umfasst, der an einer Unterkante der Einhängeeinrichtung (2) angeordnet und dazu eingerichtet ist, das Photovoltaikmodul (7) zu untergreifen.

13. Hybridsolarmodulsystem mit einem Wärmetauschermodul (3) zur Befestigung an einer Fassade (20), das mindestens einen Fluidkanal (3a) und eine Befestigungseinrichtung (4) aufweist, und einem Photovoltaikmodul (7),
**dadurch gekennzeichnet, dass**
das Photovoltaikmodul (7) auf seiner Rückseite eine zur Befestigungseinrichtung (4) komplementär ausgebildete Einhängeeinrichtung (2) aufweist, wobei die Einhängeeinrichtung (2) dazu eingerichtet ist, so in die Befestigungseinrichtung (4) einzugreifen, dass das Photovoltaikmodul (7) am Wärmetauschermodul (3) hängend befestigt werden kann, wobei die Einhängeeinrichtung (2) in der Weise ausgebildet ist, dass das Photovoltaikmodul (7) durch sein Eigengewicht flächig anliegend an das Wärmetauschermodul (3) angepresst wird.

14. Verfahren zur Befestigung von einem Hybridsolarmodulsystem gemäß dem Anspruch 13 an einer Fassade (20), mit einem Befestigungssystem nach einem der Ansprüchen 1-12, aufweisend die folgenden Schritte:
- Befestigen von Justieranordnungen (8) an der Fassade (20);
- horizontales Fixieren einer Tragschiene (9) an einer Mehrzahl von Justieranordnungen (8);
- Befestigen eines Wärmetauschermoduls (3) mit mindestens einem Fluidkanal (3a) an der Tragschiene (9); und Befestigen eines Photovoltaikmoduls (7) am Wärmetauschermodul (3) durch Einhängen einer auf der Rückseite des Photovoltaikmoduls (7) befestigten Einhängeeinrichtung (2) in eine zur Einhängeeinrichtung (2) komplementär ausgebildete Befestigungseinrichtung (3) des Wärmetauschermoduls (3), wobei die Einhängeeinrichtung (2) in der Weise ausgebildet ist, dass das Photovoltaikmodul (7) durch sein Eigengewicht flächig anliegend an das Wärmetauschermodul (3) angepresst wird.

## Claims

1. Fastening system (1) for a hybrid solar module system, having a heat exchanger module (3) for fastening to a façade (20), which heat exchanger module (3) has at least one fluid channel (3a) and a fastening device (4),
**characterized by**
a suspension device (2) for fastening to a rear side of a photovoltaic module (7), wherein the suspension device (2) is designed in a complementary manner to the fastening device (4) and is configured to engage in the fastening device (4) in such a way that the photovoltaic module (7) can be fastened to the heat exchanger module (3) in a hanging position by means of the suspension device (2), wherein the suspension device (2) is designed in such a way that the photovoltaic module (7), by virtue of its intrinsic weight, is pressed onto the heat exchanger module (3) so as to bear flat against it.

2. Fastening system (1) according to Claim 1, **characterized in that** the suspension device (2) is designed in such a way that the intrinsic weight of the photovoltaic module (7) fixes the suspension device (2) in the fastening device (4) when engaging in the fastening device (4) and thus fixes the photovoltaic module (7) at a predetermined distance from the heat exchanger module (3).

3. Fastening system (1) according to one of the preceding claims, **characterized in that** the suspension device (2) has hook-like projections (2a) which are configured to engage in the fastening device (4).

4. Fastening system (1) according to Claim 3, **characterized in that** the hook-like projections (4) each have an at least partially curved contact edge (2b) via which the engagement device (2) when engaging in the fastening device (3) can slide into a latching position in which the photovoltaic module (7) is fixed at the predetermined distance from the heat exchanger module (3).

5. Fastening system (1) according to one of the preceding claims, **characterized in that** the suspension device (2) can be fastened to the photovoltaic module (7) by being adhesively bonded to the rear side of the photovoltaic module (7).

6. Fastening system (1) according to one of the preceding claims, **characterized in that** the suspension device (2) is designed to be strip-like, and the fastening device (4) is designed as a profile-like depression in the heat exchanger module (3) that extends parallel to the at least one fluid channel (2a), in such a way that the strip-like suspension device (2) can be substantially completely sunk in the profile-like depression.

7. Fastening system (1) according to Claim 6, **characterized in that** a rear wall (4b) of the profile-like depression has slots (4a) in which at least parts of the suspension device (2) can engage.

8. Fastening system (1) according to one of the preceding claims, **characterized in that** the fastening device (4) is of double-walled design and has a rear back wall (4c) in which are formed cutouts (4e) for fastening the fastening device (4) to the façade (20).

9. Fastening system (1) according to one of the preceding claims, **characterized by**
- adjusting arrangements (8) for fastening to the façade (20), and
- a supporting rail (9) which can be fixed horizontally to a plurality of adjusting arrangements (8) and which is intended for fastening the heat exchanger module (3) to the adjusting arrangements (8), wherein the adjusting arrangements (8) are configured to set the distance and/or the orientation of the heat exchanger module (3) fastened to the supporting rail (9) relative to the façade (20).

10. Fastening system (1) according to Claim 9, **characterized in that** the adjusting arrangements (8) each have a body (8a) and two setting elements (8b) which can be at least partially sunk in the body (8a) and which each have a bearing head (8b') against which the supporting rail (9) can bear, wherein the supporting rail (9) has a plurality of through-bores through each of which there can engage a fixing element (8c) of an adjusting arrangement (9) in such a way that the supporting rail (9) can be fastened to the adjusting arrangements (8) with a clamping action by means of the fixing elements (8c) .

11. Fastening system (1) according to Claim 8 and one of Claims 9 or 10, **characterized in that** the supporting rail (9) has a supporting foot (9a) which is configured to engage in a cutout (4e) in the rear back wall (4c) of the profile-like depression in such a way that the heat exchanger module (3) can be fastened to the supporting rail (9) in a hanging position.

12. Fastening system (1) according to one of the preceding claims, **characterized in that** the suspension device (2) has a securing means (6) for securing the photovoltaic module (7), wherein the securing means (6) comprises an angle bracket which is arranged on a lower edge of the suspension device (2) and is configured to engage below the photovoltaic module (7).

13. Hybrid solar module system having a heat exchanger module (3) for fastening to a façade (20), which heat exchanger module (3) has at least one fluid channel (3a) and a fastening device (4), and having a photovoltaic module (7),
**characterized in that**
the photovoltaic module (7) has on its rear side a suspension device (2) which is designed in a complementary manner to the fastening device (4), wherein the suspension device (2) is configured to engage in the fastening device (4) in such a way that the photovoltaic module (7) can be fastened to the heat exchanger module (3) in a hanging position, wherein the suspension device (2) is designed in such a way that the photovoltaic module (7), by virtue of its intrinsic weight, is pressed onto the heat exchange module (3) so as to bear flat against it.

14. Method for fastening a hybrid solar module system according to Claim 13 to a façade (20) with a fastening system according to one of Claims 1-12, comprising the following steps:
- fastening adjusting arrangements (8) to the façade (20);
- horizontally fixing a supporting rail (9) to a plurality of adjusting arrangements (8);
- fastening a heat exchanger module (3) having at least one fluid channel (3a) to the supporting rail (9); and
- fastening a photovoltaic module (7) to the heat exchanger module (3) by suspending a suspension device (2), which is fastened to the rear side of the photovoltaic module (7), in a fastening device (3) of the heat exchanger module (3) that is designed to be complementary to the suspension device (2), wherein the suspension device (2) is designed in such a way that the photovoltaic module (7), by virtue of its intrinsic weight, is pressed onto the heat exchanger module (3) so as to bear flat against it.

## Revendications

1. Système de fixation (1) pour un système de module solaire hybride qui présente un module échangeur thermique (3) pour la fixation à une façade (20), qui présente au moins un canal de fluide (3a) et un dispositif de fixation (4),
**caractérisé par**
un dispositif de suspension (2) pour la fixation à une face arrière d'un module photovoltaïque (7), cependant que le dispositif de suspension (2) est configuré complémentaire par rapport au dispositif de fixation (4) et est agencé pour s'engrener dans le dispositif de fixation (4) de manière à ce que le module photovoltaïque (7) puisse être fixé avec le dispositif de suspension (2) en suspension sur le module échangeur thermique (3), cependant que le dispositif de suspension (2) est configuré de manière à ce que le module photovoltaïque (7) soit pressé en s'appuyant en surface contre le module échangeur thermique (3) sous l'effet de son propre poids.

2. Système de fixation (1) selon la revendication 1, **caractérisé en ce que** le dispositif de suspension (2) est configuré de manière à ce que le poids propre du module photovoltaïque (7) fixe le dispositif de suspension (2) dans le dispositif de fixation (4) lors de l'engrènement dans le dispositif de fixation (4) et fixe ainsi le module photovoltaïque (7) à un écart prédéfini par rapport au module échangeur thermique (3).

3. Système de fixation (1) selon l'une des revendications précédentes, **caractérisé en ce que** le dispositif de suspension (2) présente des saillies de type crochet (2a) qui sont agencées pour s'engrener dans le dispositif de fixation (4).

4. Système de fixation (1) selon la revendication 3, **caractérisé en ce que** les saillies de type crochet (4) présentent chacune une arête de contact (2b) recourbée au moins par sections sur laquelle le dispositif de suspension (2) peut glisser dans le dispositif de fixation (3) jusqu'à une position d'enclenchement dans laquelle le module photovoltaïque (7) est fixé à un écart prédéfini par rapport au module échangeur thermique (3).

5. Système de fixation (1) selon l'une des revendications précédentes, **caractérisé en ce que** le dispositif de suspension (2) peut être fixé sur le module photovoltaïque (7) par collage sur la face arrière du module photovoltaïque (7).

6. Système de fixation (1) selon l'une des revendications précédentes, **caractérisé en ce que** le dispositif de suspension (2) est configuré de type baguette et le dispositif de fixation (4) en tant que renfoncement de type profilé dans le module échangeur thermique (3) qui s'étend parallèlement au au moins un canal de fluide (2a) de telle manière que le dispositif de suspension de type baguette (2) peut être enfoncé sensiblement entièrement dans le renfoncement de type profilé.

7. Système de fixation (1) selon la revendication 6, **caractérisé en ce qu'**une paroi arrière (4b) du renfoncement de type profilé présente des fentes (4a) dans lesquelles au moins des parties du dispositif de suspension (2) peuvent s'engrener.

8. Système de fixation (1) selon l'une des revendications précédentes, **caractérisé en ce que** le dispositif de fixation (4) est configuré à double paroi et présente une paroi arrière postérieure (4c) dans laquelle des évidements (4e) sont ménagés pour la fixation du dispositif de fixation (4) sur la façade (20).

9. Système de fixation (1) selon l'une des revendications précédentes, **caractérisé par**
- des dispositifs d'ajustage (8) pour la fixation sur la façade (20) et
- un rail de support (9) qui peut être fixé horizontalement à une multitude de dispositifs d'ajustage (8) pour la fixation du module échangeur thermique (3) sur les dispositifs d'ajustage (8),
cependant que les dispositifs d'ajustage (8) sont agencés de manière à régler l'écart et/ou l'orientation du module échangeur thermique (3) fixé sur le rail de support (9) par rapport à la façade (20).

10. Système de fixation (1) selon la revendication 9, **caractérisé en ce que** les dispositifs d'ajustage (8) présentent chacun un corps (8a) et deux éléments de réglage (8b) qui peuvent être au moins partiellement enfoncés dans le corps (8a) avec chacun une tête d'appui (8b') contre laquelle le rail de support (9) peut reposer, cependant que le rail de support (9) présente plusieurs forures de passage qui peuvent être chacune traversée par un élément de fixation (8c) d'un dispositif d'ajustage (8) de telle manière que le rail de support (9) peut être fixé au moyen des éléments de fixation (8c) en étant serrés sur les dispositifs d'ajustage (8).

11. Système de fixation (1) selon la revendication 8 et l'une des revendications 9 ou 10, **caractérisé en ce que** le rail de support (9) présente un pied de support (9a) qui est agencé de manière à s'engrener dans un évidement (4e) de la paroi arrière postérieure (4c) du renfoncement de type profilé de telle manière que le module échangeur thermique (3) peut être fixé en suspension sur le rail de support (9).

12. Système de fixation (1) selon l'une des revendications précédentes, **caractérisé en ce que** le dispositif de suspension (2) présente un moyen de sécurisation (6) pour sécuriser le module photovoltaïque (7), cependant que le moyen de sécurisation (6) comprend un angle qui est placé sur une arête inférieure du dispositif de suspension (2) et qui est agencé pour saisir le module photovoltaïque (7) par-dessous.

13. Système de module solaire hybride avec un module échangeur thermique (3) pour la fixation à une façade (20) qui présente au moins un canal de fluide (3a) et un dispositif de fixation (4),
**caractérisé en ce que** le module photovoltaïque (7) présente sur sa face arrière un dispositif de suspension (2) configuré complémentaire par rapport au dispositif de fixation (4), cependant que le dispositif de fixation (2) est agencé pour s'engrener dans le dispositif de fixation (4) de manière à ce que le module photovoltaïque (7) puisse être fixé en suspension sur le module échangeur thermique (3), cependant que le dispositif de suspension (2) est configuré de manière à ce que le module photovoltaïque (7) soit pressé en s'appuyant en surface contre le module échangeur thermique (3) sous l'effet de son propre poids.

14. Procédé pour la fixation d'un système de module solaire hybride selon la revendication 13 sur une façade (20), avec un système de fixation selon l'une des revendications 1 à 12, qui présente les étapes suivantes :
- fixation de dispositifs d'ajustage (8) sur la façade (20) ;
- fixation horizontale d'un rail de support (9) à une multitude de dispositifs d'ajustage (8) ;
- fixation d'un module échangeur thermique (3) avec au moins un canal de fluide (3a) sur le rail de support (9) et
- fixation d'un module photovoltaïque (7) sur le module échangeur thermique (3) par suspension d'un dispositif de suspension (2) fixé à la face arrière du module photovoltaïque (7) dans un dispositif de fixation (3) du module échangeur thermique (3), cependant que le dispositif de suspension (2) est configuré de telle manière que le module photovoltaïque (7) est pressé en s'appuyant en surface contre le module échangeur thermique (3) sous l'effet de son propre poids.
